# DEMANDE DE BREVET EUROPEEN

(11) **EP 3 620 690 A1**
(43) Date de publication de la demande: **11.03.2020**
(21) Numéro de dépôt: 18193266.6
(22) Date de dépôt: 07.09.2018
(51) Int. Cl.: F16H 63/34

(54) **SYSTÈME DE BLOCAGE EN STATIONNEMENT POUR UNE TRANSMISSION D'UNE BOÎTE DE VITESSES AUTOMATIQUE, HYBRIDE, OU ÉLECTRIQUE D'UN VÉHICULE AUTOMOBILE**

(71) Demandeur: DURA Automotive Holdings U.K., Ltd., Birmingham, B35 7AG (GB)
(72) Inventeur: MAITRE, Sébastien, 43120 Monistrol sur Loire (FR)
(74) Mandataire: Cabinet Laurent & Charras

(57) **Abrégé**

L'invention concerne un de blocage en stationnement pour une transmission d'une boîte de vitesses automatique, hybride, ou électrique d'un véhicule automobile, le système (1) comprenant :
- un loquet (5) pourvu d'un doigt (6) de blocage destiné à s'engager dans un creux d'une roue de blocage liée en rotation à une sortie de la transmission ;
- un chariot (8) monté à l'extrémité d'une tige (9) de guidage et coulissant pour adopter alternativement une position de verrouillage, poussé directement ou indirectement par un ressort (10) agencé autour de la tige (9), dans laquelle le chariot (8) pousse le loquet (5) dans une position d'engagement du doigt (6) dans le creux de la roue pour bloquer la sortie de la transmission, ou une position neutre, poussé par un actionneur, dans laquelle le loquet (5) est rappelé par un organe élastique de rappel (7) dans une position de désengagement du doigt (6), le chariot (8) comprend un premier rouleau (11) et un deuxième rouleau (12), chacun monté libre en rotation autour d'une goupille (13), le premier rouleau (11) étant positionné pour rouler contre le loquet (5) lors du passage du chariot (8) en position de verrouillage, et le deuxième rouleau (12) étant positionné pour rouler en contre-appui sur une paroi fixe du système (1), opposée au loquet (5), le chariot (8) étant en forme de cage avec des parois supérieure et inférieure ouvertes pour le débordement radial des rouleaux (11, 12).

Selon l'invention, la tige (9) de guidage est reçue de manière flottante à l'intérieur de la cage et est en contact avec le premier rouleau (11) et le deuxième rouleau (12).

## Description

### DOMAINE TECHNIQUE

L'invention se rattache au secteur technique des boîtes de vitesses automatiques, hybrides, ou électriques pour véhicules automobiles.

Plus particulièrement, l'invention concerne un système de blocage en stationnement pour une transmission d'une boîte de vitesses automatique, hybride, ou électrique d'un véhicule automobile.

### ART ANTERIEUR

Dans l'état de la technique actuelle, il est connu un système de blocage en stationnement pour une transmission d'une boîte de vitesses automatique, hybride, ou électrique d'un véhicule automobile comprenant, de manière générale :
- un loquet pourvu d'un doigt de blocage destiné à s'engager dans un creux d'une roue de blocage liée en rotation à une sortie de la transmission ;
- un chariot coulissant pour adopter alternativement une position de verrouillage, poussé directement ou indirectement par un ressort, dans laquelle le chariot pousse le loquet dans une position d'engagement du doigt dans le creux de la roue pour bloquer la sortie de la transmission, ou une position neutre, poussé par un actionneur, dans laquelle le loquet est rappelé par un organe élastique de rappel dans une position de désengagement du doigt.

D'une manière connue, le chariot comprend un premier rouleau et un deuxième rouleau, chacun monté libre en rotation autour d'une goupille. Le premier rouleau est positionné pour pouvoir rouler contre le loquet lors du passage chariot en position de verrouillage, et le deuxième rouleau est positionné pour rouler, en contre-appui, sur une paroi fixe du système, opposée au loquet.

Selon une forme de réalisation particulière du système de blocage de l'art antérieur, le chariot est monté à l'extrémité d'une tige de guidage.

En principe, les systèmes de l'art antérieur sont assujettis à des moyens empêchant de les actionner lorsque le véhicule roule. Par exemple, ces moyens peuvent être informatiques et pilotés électroniquement. Cela étant, de tels moyens pilotés électroniquement ne permettent pas de détecter que le véhicule roule, lorsqu'il roule à une vitesse inférieure à 3 km/h.

De ce qui précède, les systèmes de blocage de l'art antérieur peuvent être actionnés, même si le véhicule roule, et notamment à une vitesse inférieure à 3 km/h. Lors de l'actionnement du système, le chariot pousse donc le loquet dans une position de verrouillage, dans laquelle le doigt du loquet doit être engagé dans un creux de la roue liée à la transmission.

Cependant, étant donné que le véhicule roule, la roue qui présente des parties en creux, et qui est liée à la transmission, est toujours en rotation. Il en résulte que le loquet, poussé par le chariot, tape et rebondit contre la roue, jusqu'au moment où le doigt du loquet arrive, après de multiples tentatives, à pénétrer dans le creux de la roue.

Ces impacts successifs du doigt du loquet contre la roue sont plus généralement connus sous le nom de phénomène de « ratcheting » (terme Anglo-Saxon), sont transmis aux différents éléments du système de blocage, et sont la cause de détériorations prématurées de la roue, et/ou du loquet, et/ou du système de blocage en tant que tel.

### EXPOSE DE L'INVENTION

Le but de la présente invention est donc de fournir un système de blocage permettant de remédier aux inconvénients de l'art antérieur, en présentant une conception lui permettant de résister aux phénomènes de « ratcheting ».

À cet effet, il a été mis au point un système de blocage en stationnement pour une transmission d'une boîte de vitesses automatique, hybride, ou électrique d'un véhicule automobile, conforme à l'art antérieur en ce qu'il comprend :
- un loquet pourvu d'un doigt de blocage destiné à s'engager dans un creux d'une roue de blocage liée en rotation à une sortie de la transmission ;
- un chariot monté à l'extrémité d'une tige de guidage et coulissant pour adopter alternativement une position de verrouillage, poussé directement ou indirectement par un ressort agencé autour de la tige, dans laquelle le chariot pousse le loquet dans une position d'engagement du doigt dans le creux de la roue pour bloquer la sortie de la transmission, ou une position neutre, poussé par un actionneur, dans laquelle le loquet est rappelé par un organe élastique de rappel dans une position de désengagement du doigt, le chariot comprenant un premier rouleau et un deuxième rouleau, chacun monté libre en rotation autour d'une goupille, le premier rouleau étant positionné pour rouler contre le loquet lors du passage du chariot en position de verrouillage, et le deuxième rouleau étant positionné pour rouler en contre-appui sur une paroi fixe du système, opposée au loquet, le chariot étant en forme de cage avec des parois supérieure et inférieure ouvertes pour le débordement radial des rouleaux.

Selon l'invention, la tige de guidage est reçue de manière flottante à l'intérieur de la cage et est en contact avec le premier rouleau et le deuxième rouleau.

Ainsi, lors du phénomène de « ratcheting », les impacts du loquet sur la roue de la transmission repoussent violemment le loquet en position de désengagement, dans laquelle il heurte et repousse violemment le chariot en position neutre. Le chariot, quant à lui, poussé en permanence en position de déverrouillage par le ressort, subit donc des allers-retours rapides entre les positions neutre et de verrouillage.

Etant donné que la tige est en contact permanent avec le premier rouleau et le deuxième rouleau, c'est-à-dire notamment en appui contre ceux-ci, les efforts sont transmis directement à la tige, qui absorbe et dissipe les impacts du loquet. Cela permet, notamment, d'avoir un système qui puisse résister aux phénomènes de « ratcheting ».

En d'autres termes, l'invention permet de reprendre directement les chocs durant le phénomène de « ratcheting », de reprendre directement les chocs générés par l'actionneur, de garantir la fonction de déverrouillage sous charge.

Selon une forme de réalisation particulière, le premier rouleau et le deuxième rouleau sont en contact avec une paroi du chariot, opposée au ressort, au moins lorsque le chariot est poussé en position neutre par l'actionneur.

Par exemple, dans cette configuration, le chariot est poussé en position de verrouillage directement par le ressort.

Selon une forme de réalisation particulière, le premier rouleau et le deuxième rouleau sont en permanence en contact avec la paroi du chariot, opposée au ressort.

Dans cette configuration, le chariot est poussé en position de verrouillage par la tige, ladite tige étant elle-même poussée par le ressort.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une vue en perspective du système de blocage en stationnement, selon la présente invention
- la figure 2 est une vue similaire à celle de la figure 1, le système étant représenté en perspective éclatée ;
- la figure 3 est une vue similaire à celle de la figure 1, le boîtier du système étant présenté en transparence ;
- la figure 4 est une vue similaire à celle de la figure 3, sans le boîtier ;
- la figure 5 est une vue en coupe transversale du chariot, illustrant le contact entre la tige et les rouleaux, ainsi que le chariot poussé directement par le ressort en position de verrouillage ;
- la figure 6 est une vue en coupe transversale du chariot similaire à celle de la figure 5, illustrant le contact entre la tige et les rouleaux, ainsi que le chariot poussé en position de verrouillage par la tige, elle-même poussée par le ressort.

### EXPOSE DETAILLE DE L'INVENTION

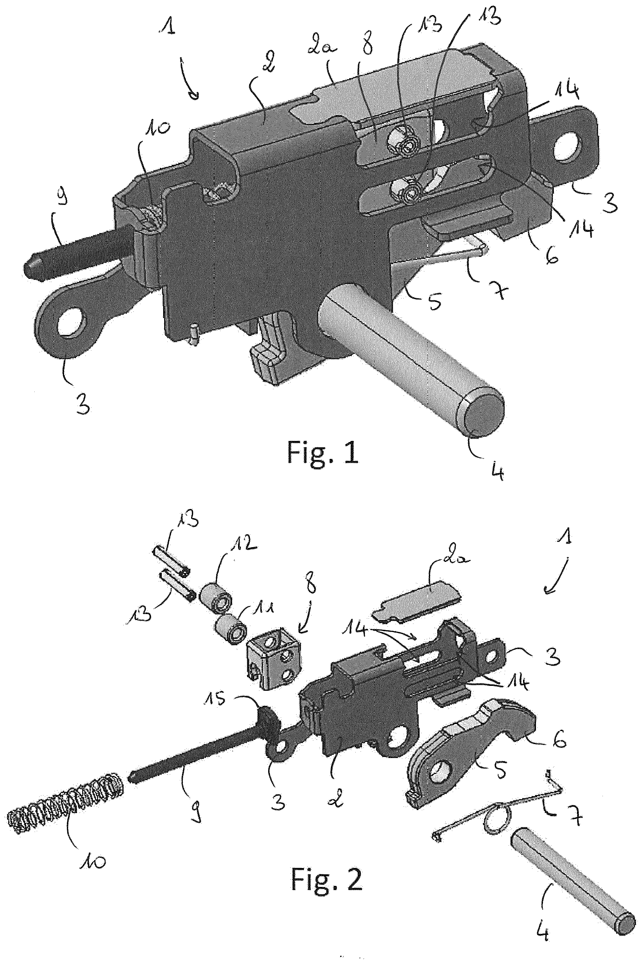

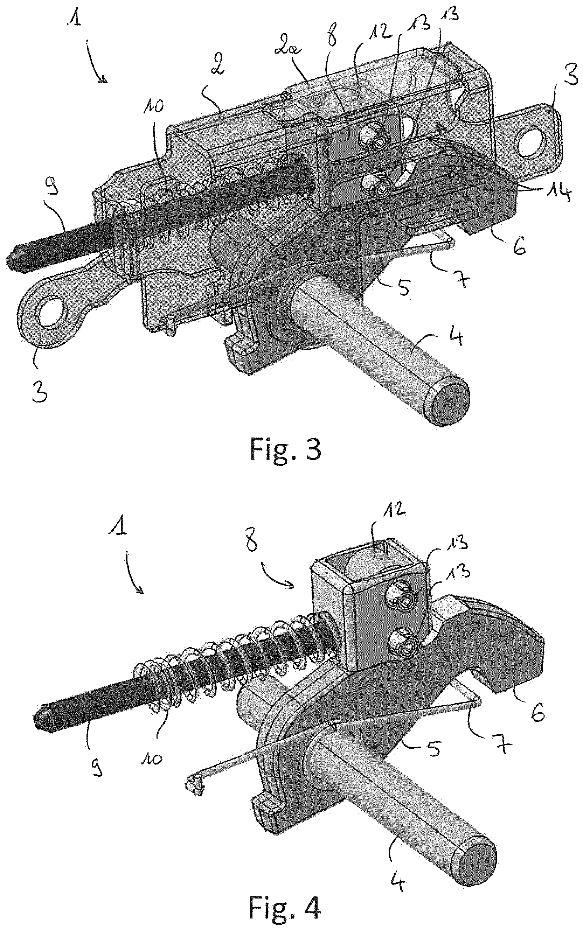

En référence aux figures 1 à 6, l'invention concerne un système (1) de blocage en stationnement pour une transmission d'une boîte de vitesses automatique de véhicules automobiles, et de préférence un véhicule électrique.

Le système (1) comprend un boîtier (2) réalisé par au moins une tôle pliée et découpée.

Le boîtier (2) comprend au moins deux pattes de fixation (3), de préférence une à l'avant, et une à l'arrière, à une partie fixe de la boîte de vitesse du véhicule.

Le boîtier (2) est traversé latéralement de part en part par un axe (4) autour duquel est monté pivotant un loquet (5).

Le loquet (5) est donc disposé à l'intérieur du boîtier (2), et est apte à déborder à partir d'une paroi inférieure ouverte du boîtier (2).

Le loquet (5) est pourvu, à l'une de ses extrémités, d'un doigt (6) de blocage destiné à s'engager dans un creux d'une roue de blocage liée en rotation à une sortie de la transmission de la boîte de vitesse du véhicule.

Le loquet (5) est maintenu, et rappelé dans une position de désengagement du doigt (6) par l'intermédiaire d'un organe élastique de rappel (7), par exemple sous la forme d'un ressort de torsion, agencé autour de l'axe (4) du loquet (5), et coopérant avec des parties fixes du boîtier (2).

Le boîtier (2) comprend également intérieurement un chariot (8) monté coulissant pour adopter alternativement une position de verrouillage dans laquelle le chariot (8) pousse le loquet (5) dans une position d'engagement du doigt (6) dans le creux de la roue, afin de bloquer la sortie de la transmission, et donc de bloquer en stationnement le véhicule.

Le chariot (8) est apte à adopter une autre position, dite neutre, dans laquelle il n'interfère pas avec le loquet (5), permettant audit loquet (5) d'être rappelé par l'organe élastique de rappel (7) dans sa position de désengagement du doigt (6).

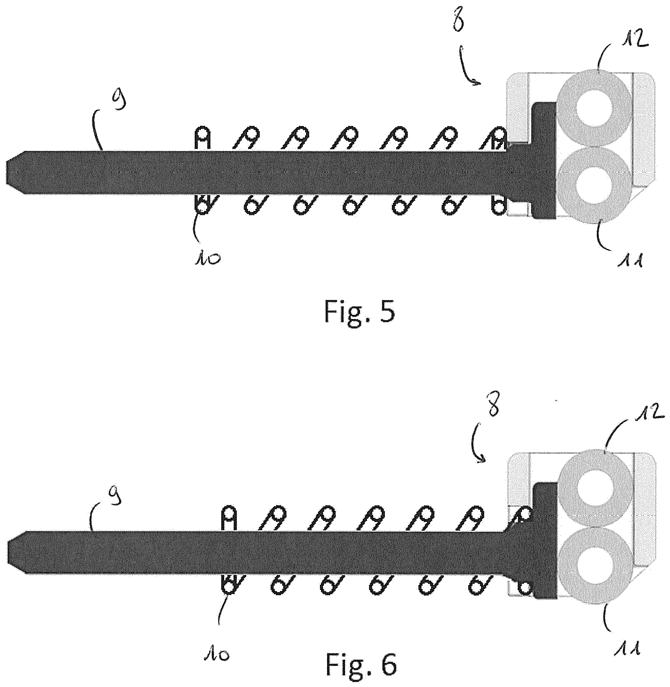

Plus précisément, et en référence à la figure 5, le chariot (8) est monté à l'extrémité d'une tige (9) de guidage traversant une paroi arrière du boîtier (2). Un ressort (10) de compression est monté autour de la tige (9), entre la paroi arrière du boîtier (2) et le chariot (8), afin de pousser ledit chariot (8) en position de verrouillage.

D'une manière connue, le système (1) coopère également avec un actionneur, non représenté, par exemple du type poussoir à vérin, positionné au niveau d'une paroi avant ouverte du boîtier (2), et positionné pour pousser le chariot (8) dans sa position neutre, à l'encontre du ressort (10).

Pour guider et faciliter les déplacements du chariot (8), le chariot (8) comprend un premier rouleau (11) et un deuxième rouleau (12), chacun monté libre en rotation autour d'une goupille (13), avec le premier rouleau (11) positionné pour rouler contre le loquet (5) lors du passage du chariot (8) en position de verrouillage, et avec le deuxième rouleau (12) positionné pour rouler en contre-appui sur une paroi fixe du système (1), et notamment sur une paroi supérieure (2a) du boîtier (2), opposée au loquet (5).

Plus précisément, et en référence à la figure 5, le chariot (8) se présente sous la forme d'une cage à l'intérieur de laquelle sont reçus, de manière flottante, le premier rouleau (11) et le deuxième rouleau (12), ainsi que la tige (9) de guidage. Le chariot (8) présente, notamment, des parois supérieures et inférieures ouvertes pour le débordement radial des rouleaux (11, 12).

Lors du phénomène de « ratcheting » le chariot (8), frappé par le loquet (5), se déplace selon des mouvements alternatifs violents entre sa position de verrouillage et sa position neutre. Afin de maîtriser ces différentes positions, et de résister au maximum aux impacts inhérents, au moins l'une des goupilles (13) associées au rouleau, et de préférence les deux, débordent de part et d'autre des rouleaux (11, 12) pour venir buter contre des parties fixes du système (1) formant les butées d'arrêt des positions de verrouillage et neutre du chariot (8).

Selon une forme de réalisation particulière, les parois latérales du boîtier (2) sont chacune ajourée d'au moins une fente (14), et de préférence chacune ajourée d'au moins deux fentes (14) de guidage des extrémités des goupilles (13), lesdites extrémités des fentes (14) formant les butées d'arrêts, en tant que telles.

De préférence, et afin d'assurer le caractère flottant des premier et deuxième rouleaux (11, 12), le chariot (8) comprend des parois latérales dans lesquelles sont aménagées, de chaque côté, deux orifices de réception des goupilles (13), dont les diamètres sont plus importants que ceux des goupilles (13).

Afin d'assurer un caractère flottant à la tige (9) par rapport au chariot (8), le chariot (8) comprend une paroi arrière présentant une ouverture de réception et d'engagement de la tige (9), dont les dimensions sont plus importantes que celles du diamètre de la tige (9).

Selon une forme de réalisation particulière, la tige (9) de guidage du chariot (8) présente une extrémité (15) en forme de « T » disposée à l'intérieur du chariot (8), notamment en appui contre les rouleaux (11, 12), et permettant ainsi un accouplement entre la tige (9) et le chariot (8).

De préférence, et comme évoqué plus haut, la tige (9) est en contact avec le premier rouleau (11) et le deuxième rouleau (12). Par ailleurs, le premier rouleau (11) et le deuxième rouleau (12) sont également en contact avec une paroi avant du chariot (8), opposée au ressort (10) et à l'extrémité (15) en forme de « T » de la tige (9), au moins lorsque le chariot (8) est poussé en position neutre par l'actionneur.

Dans cette configuration, et en référence à la figure 5, le chariot (8) est, par exemple, poussé en position de verrouillage directement par le ressort (10).

D'une manière avantageuse, le premier rouleau (11) et le deuxième rouleau (12) sont en permanence en contact avec la paroi avant du chariot (8).

Dans cette configuration, et en référence à la figure 6, le chariot (8) est, par exemple, poussé en position de verrouillage par la tige (9), et notamment par l'extrémité (15) en forme de « T » de la tige (9), ladite tige (9), et notamment ladite extrémité (15) en forme de « T » étant elle-même poussée par le ressort (10).

Il ressort de ce qui précède, qu'étant donné que les goupilles (13) associées aux rouleaux (11, 12) sont utilisées pour venir buter en position neutre et en position de verrouillage du chariot (8), cela permet de maîtriser les différentes positions du chariot (8), d'une manière fiable mécaniquement, et d'éviter les détériorations des pièces composant le système (1) de blocage.

D'une manière totalement indépendante, le fait que les rouleaux (11, 12) et la tige (9) sont reçus de manière flottante à l'intérieur du chariot (8), les efforts, lors du phénomène de « ratcheting » transmis par le loquet (5), sont transmis directement à la tige (9), en passant par les goupilles (13) et les rouleaux (11, 12), mais sans passer par le chariot (8).

Également, d'une manière aussi indépendante, étant donné que la tige (9) est en contact et en appui en permanence contre le premier rouleau (11) et le deuxième rouleau (12), et que le premier rouleau (11) et le deuxième rouleau (12) sont en contact, et de préférence en permanence, avec une paroi avant du chariot, opposée au ressort (10), les efforts sont transmis directement à la tige (9), qui absorbe et dissipe ces impacts. Cela permet, notamment, d'avoir un système (1) qui puisse résister aux phénomènes de « ratcheting ».

## Revendications

1. Système (1) de blocage en stationnement pour une transmission d'une boîte de vitesses automatique, hybride, ou électrique d'un véhicule automobile, le système (1) comprenant :
- un loquet (5) pourvu d'un doigt (6) de blocage destiné à s'engager dans un creux d'une roue de blocage liée en rotation à une sortie de la transmission ;
- un chariot (8) monté à l'extrémité d'une tige (9) de guidage et coulissant pour adopter alternativement une position de verrouillage, poussé directement ou indirectement par un ressort (10) agencé autour de la tige (9), dans laquelle le chariot (8) pousse le loquet (5) dans une position d'engagement du doigt (6) dans le creux de la roue pour bloquer la sortie de la transmission, ou une position neutre, poussé par un actionneur, dans laquelle le loquet (5) est rappelé par un organe élastique de rappel (7) dans une position de désengagement du doigt (6), le chariot (8) comprend un premier rouleau (11) et un deuxième rouleau (12), chacun monté libre en rotation autour d'une goupille (13), le premier rouleau (11) étant positionné pour rouler contre le loquet (5) lors du passage du chariot (8) en position de verrouillage, et le deuxième rouleau (12) étant positionné pour rouler en contre-appui sur une paroi fixe du système (1), opposée au loquet (5), le chariot (8) étant en forme de cage avec des parois supérieure et inférieure ouvertes pour le débordement radial des rouleaux (11, 12) ;
***caractérisé* en ce que** la tige (9) de guidage est reçue de manière flottante à l'intérieur de la cage et est en contact avec le premier rouleau (11) et le deuxième rouleau (12).

2. Système (1) selon la revendication 1, ***caractérisé* en ce que** le premier rouleau (11) et le deuxième rouleau (12) sont en contact avec une paroi du chariot (8), opposée au ressort (10), au moins lorsque le chariot (8) est poussé en position neutre par l'actionneur.

3. Système (1) selon la revendication 2, ***caractérisé* en ce que** le premier rouleau (11) et le deuxième rouleau (12) sont en permanence en contact avec la paroi du chariot (8), opposée au ressort (10).

4. Système (1) selon la revendication 2, ***caractérisé* en ce que** le chariot (8) est poussé en position de verrouillage directement par le ressort (10).

5. Système (1) selon la revendication 3, ***caractérisé* en ce que** le chariot (8) est poussé en position de verrouillage par la tige (9), ladite tige (9) étant elle-même poussée par le ressort (10).
